# EUROPÄISCHE PATENTSCHRIFT

(11) **EP 2 874 763 B1**
(45) Veröffentlichungstag und Bekanntmachung des Hinweises auf die Patenterteilung: **23.08.2017**
(21) Anmeldenummer: 13747778.2
(22) Anmeldetag: 03.07.2013
(51) Int. Cl.: B09B 3/00, C05F 7/00, C02F 11/06, F23G 7/00, B01D 53/00, B01D 46/18, C21B 7/00, F27B 1/16, F23J 15/02

(54) **VERFAHREN UND ANLAGE ZUR STOFFLICHEN UND/ODER ENERGETISCHEN VERWERTUNG VON PHOSPHORHALTIGEN ABFÄLLEN**
METHOD AND PLANT FOR RECOVERING MATERIAL AND/OR ENERGY FROM PHOSPHORUS-CONTAINING WASTE
PROCÉDÉ ET INSTALLATION POUR VALORISER LA MATIÈRE ET/OU L'ÉNERGIE DE DÉCHETS CONTENANT DU PHOSPHORE

(30) Priorität: 19.07.2012 DE 102012014357
(43) Veröffentlichungstag der Anmeldung: 27.05.2015
(73) Patentinhaber: Mallon, Joachim, 04158 Leipzig (DE); Schaaf, Michael, 04178 Leipzig (DE)
(72) Erfinder: Mallon, Joachim, 04158 Leipzig (DE); Schaaf, Michael, 04178 Leipzig (DE)
(74) Vertreter: Beckord & Niedlich
(86) Internationale Anmeldenummer: PCT/DE2013/000354
(87) Internationale Veröffentlichungsnummer: WO 2014/036983

(56) Entgegenhaltungen:
- AT-A4- 510 273
- DE-A1- 4 324 699
- Ingitec: "Metallurgisches Phosphor-Recycling aus Klärschlämmen und Filterstäuben als Voraussetzung für die wirtschaftliche Erzeugung eines hochwertigen Phosphor-Düngemittels aus Abfällen", , 1. Januar 2009 (2009-01-01), XP055079432, Gefunden im Internet: URL:https://www.dbu.de/ab/DBU-Abschlussber icht-AZ-24557.pdf [gefunden am 2013-09-16]

## Beschreibung

Die Erfindung betrifft ein Verfahren und eine Anlage zur stofflichen und energetischen Verwertung von phosphorhaltigen Abfällen mittels Luft- und/oder Sauerstoff-Schmelzvergasung in metallurgischen Schachtöfen.

Zunehmend verstärkt ist Ziel der Recyclingwirtschaft, den Verbrauch endlicher natürlicher Ressourcen, so auch von Phosphor, zurückzufahren bzw. solche Rohstoffe effizienter zu nutzen [Förderinitiative "Kreislaufwirtschaft Pflanzennährstoffe, insbesondere Phosphor", Schlusspräsentation, Berlin 14.09.2011, Dohmann, Tagungsbeitrag 1]. Phosphor ist für alle biologischen Prozesse essentiell und spielt eine Schlüsselrolle bei der Übertragung und Speicherung von Energie, bei der Synthese von Aminosäuren und Proteinen, ist nicht substituierbar und ist für viele Wachstumsprozesse der limitierende Faktor. Er wird nicht verbraucht, verdünnt sich aber, so dass eine Aufkonzentration wirtschaftlich immer aufwändiger wird. Wichtigste Quelle für eine Phosphorrückgewinnung sind tierische und menschliche Ausscheidungen (Klärschlamm). Bei vollständigem Recycling ließen sich mit Klärschlamm (66.000 Mg P/a) sowie Tier- und Knochenmehl (23.700 Mg P/a) etwa 75% der deutschen Mineraldüngerimporte (i. M. 120.000 Mg P/a) einsparen [Förderinitiative "Kreislaufwirtschaft Pflanzennährstoffe, insbesondere Phosphor", Schlusspräsentation, Berlin 14.09.2011, Pinnekamp, Tagungsbeitrag Vorwort].

Nach dem Stand der Technik werden folgende verfahrenstechnische / anlagentechnische Lösungen für das Recycling von Klärschlamm, Tiermehl und ihren Aschen aus den jeweiligen Monoverbrennungen als besonders erfolgversprechend eingeschätzt [Förderinitiative "Kreislaufwirtschaft Pflanzennährstoffe, insbesondere Phosphor", Schlusspräsentation, Berlin 14.09.2011, Rosckosch, Tagungsbeitrag Umweltbundesamt]:
- ASH DEC - thermochemisches Verfahren
   Produkt: Phosphatdünger (Rohprodukt, ggf. Mehrnährstoffdünger) aus Klärschlammaschen durch Erhitzen im Drehrohrofen unter Zusatz von Additiven
- Mephrec® - metallurgisches Verfahren
   Produkt: Kalkphosphatdüngemittel aus Klärschlamm, Klärschlammaschen und anderen phosphathaltigen Abfällen durch Luft- und/oder Sauerstoff-Schmelzvergasung im Festbettreaktor
   Dieses Verfahren wird z. B. in Ingitec: "Metallurgisches Phosphor-Recycling aus Klärschlämmen und Filterstäuben als Voraussetzung für die wirtschaftliche Erzeugung eines hochwertigen Phosphor-Düngemittels aus Abfällen" www.dbu.de/ab/DBU-Abschlussbericht-AZ-24557.pdf (S. 13 - 15) (XP055079432) beschrieben.
- PhosRec - spezieller Sinterprozess
   Produkt: Phosphatdüngemittel bzw. Phosphatrohstoff aus Tiermehl durch Verbrennung im Drehrohrofen bei gleichzeitiger Nutzung der dabei gewonnenen Energie

Bisher realisiert nur das Mephrec-Verfahren das gleichzeitige stoffliche und energetische Recycling von organischen, phosphorhaltigen mehr oder weniger heizwertreichen Abfällen und/oder Einsatzstoffen in einem Verfahrensschritt, indem eine phosphorhaltige, dem bekannten Düngemittel "Thomasmehl" vergleichbare Schlacke mit hoher Zitronensäurelöslichkeit der in der Schlackenmatrix gebildeten Kalksilicophosphate, eine verfahrensspezifisch als Schwermetallsenke wirkende eisenmetallische Legierung und ein mehr oder weniger heizwertreiches, nach Reinigung zur direkten energetischen Nutzung über Gasmotoren oder diesen vergleichbaren Aggregaten geeignetes Brenngas erzeugt wird.

Nach DE 10 2008 045 289 wird so ein metallurgisches Verfahren zur energetischen und stofflichen Verwertung von anorganischen und/oder organischen Abfällen mit einem hohen Heizwert und zur Minimierung der notwendigen verfahrenstechnischen, anlagetechnischen, produktionsorganisatorischen und somit wirtschaftlichen Aufwendungen zur Aufbereitung der Einsatzstoffe zu Formlingen oder Briketts beansprucht, bei dem die Materialbindung bewirkenden, heizwert- und/oder wertstoffreichen Abfälle, als Bindemittel allein oder in Kombination mit einem hydraulischen Bindemittelanteil und/oder einem Magerungsmittel mit weiteren heizwert- und/oder wertstoffreichen, anorganischen und/oder organischen Abfällen vermischt, danach zu Formlingen oder Briketts ausgeformt und/oder verpresst oder extrudiert und/oder durch andere Verfahrensschritte kompaktiert oder brikettiert, gelagert und danach zur gleichzeitigen energetischen und stofflichen Verwertung in einem einzigen Verfahrensschritt unter Nutzung bekannter metallurgischer Verfahrenstechniken in Kupolöfen, Sauerstoff-Kupolöfen, Schacht-Schmelzvergasern, Hochtemperatur-Sauerstoff-Schmelzvergasern oder ähnlichen metallurgischen Aggregaten als Schüttung eingesetzt werden. Beim Absinken der in Summe aus Koks und/oder Koksersatzstoffen, nach schmelz- und vergasungstechnologischen Gesichtspunkten wahlweise zugegebenen oder nicht zugegebenen mineralischen und/oder metallischen Zuschlägen und den Formlingen und/oder Briketts bestehenden Schüttung wird im Ofenschacht getrocknet, aufgeheizt, vergast und schließlich aufgeschmolzen, wobei abhängig von der Zusammensetzung der die Schüttung bildenden Formlinge oder Briketts durch die im metallurgischen Aggregat existente Reduktionszone gleichzeitig ein heizwertreiches, also nicht ausgebranntes Ofengas, eine wertstoffreiche, flüssige Schlacke und eine flüssige Metalllegierung entstehen.
Der die Materialbindung bewirkende, heizwert- und/oder wertstoffreiche Abfall kann auch Knochen- und/oder Tiermehl sein. Als hydraulisch wirkende Bindemittel werden Zement und/oder Zementersatzstoffe beansprucht. Die insbesondere bei heizwert- und/oder wertstoffreiche Abfälle mit hoher Feuchte zugesetzten Magerungsmittel sind insbesondere wertstoffreiche, bspw. phosphorreiche, Aschen und/oder Schlacken und/oder mineralische und/oder metallische und/oder oxydische, körnige oder staubförmige Stoffe. Weitere heizwert- und/oder wertstoffreichen, anorganischen und/oder organischen Abfälle können Mischungen aus Klärschlämmen und/oder weiteren organischen und/oder anorganischen Phosphor enthaltenden Stoffen und/oder heizwerterhöhenden Stoffen sein.
Das Verfahren ist dadurch gekennzeichnet, dass im metallurgischen Aggregat gleichzeitig ein heizwertreiches, d.h. nicht ausgebranntes Ofengas, eine wertstoffreiche, z. B. phosphorreiche flüssige Schlacke und eine flüssige, als Schwermetallsenke wirkende Metalllegierung entstehen.

Nachteilig ist, dass verfahrensspezifisch ein heizwertreiches nicht ausgebranntes Ofengas erzeugt wird, welches vor der energetischen Nutzung zur Stromerzeugung eine aufwendige nasse, wegen enthaltener Reste von Organik mit integriertem Quench zur Abkühlung auf etwa 5°C komplettierte Gasreinigung erfordert.
Weiter nachteilig ist, dass verfahrensspezifisch in die Gasphase gelangender Phosphor und/oder Phosphorverbindungen technisch und technologisch aufwendig in der Gasreinigung separiert werden müssen und somit nicht für das metallurgische, stoffliche Recycling nutzbar sind.

DE 000002952642 A1 beansprucht ein Verfahren zur trockenen Heißreinigung von schadstoffhaltigen Gasen, z. B. Prozessgasen und Abgasen aus thermischen Behandlungsanlagen, die beispielsweise bei der Pyrolyse von Abfallstoffen durch deren Erhitzung auf Zersetzungstemperatur entstehen, bei dem das schadstoffhaltige Rohgas bei erhöhter Temperatur mit den dem Rohgas zugesetzten Additiven zur Reaktion gebracht wird und dabei die Schadstoffe aus dem Rohgas entfernt werden. Nachteilig ist, dass die in der Gasreinigung separierten Stäube Reaktionsprodukte von Schadstoffen und Additiven enthalten, die bei Rückführung in die thermischen Behandlungsanlagen zu unerwünschten Anreicherungen führen.

Der Erfindung liegt deshalb die Aufgabe zugrunde, ein Verfahren und eine Anlage zur stofflichen und energetischen Verwertung von phosphorhaltigen Abfällen zu schaffen, bei dem ohne aufwendige nasse, beispielsweise wegen enthaltener Reste von Organik mit integriertem Quench zur Abkühlung auf etwa 5°C komplettierte Gasreinigung, der verfahrensspezifisch bei der stofflichen und energetischen Verwertung von phosphorhaltigen Abfällen mittels Luft- und/oder Sauerstoff-Schmelzvergasung in metallurgischen Schachtöfen in die Gasphase gelangende Phosphor und/oder Phosphorverbindungen einfach separiert und für das metallurgische, stoffliche Recycling nutzbar gemacht werden kann.

Die Aufgabe wird durch die Integrierung einer im oder direkt an dem metallurgischen Schachtofen integrierten Nachverbrennungskammer als Bestandteil einer gestaffelten Gasreinigung, bestehend aus trockener Entstaubung ohne Zugabe von Additiven zur Abbindung und Austragung gasförmiger Schadstoffe durch eine Entstaubungseinrichtung mit integrierter Staubrückführung in die Schmelz- und Überhitzungszone des metallurgischen Schachtofens ohne Zugabe von Additiven zur Abbindung und Austragung gasförmiger Schadstoffe entsprechend den Merkmalen der Patentansprüche gelöst.

Vorteilhafterweise werden die nach dem Stand der Technik anerkannten apparativen, wirtschaftlichen und verfahrenstechnischen Vorteile von metallurgischen Schachtöfen mit direkter Nachverbrennung von Ofengasen mit der Luft- und/oder Sauerstoff-Schmelzvergasung von organik- und phosphorhaltigen Abfällen wie bspw. Klärschlamm verbunden, indem das im Ofen zur Luft- und/oder Sauerstoff-Schmelzvergasung erzeugte heizwertreiche Brenngas direkt mit Verbrennungsmittelüberschuss (1>1) zu einem staubhaltigen, vollständig ausgebrannten Abgas ohne Abbindung von gasförmigen Schadstoffen mittels Additiven nachverbrannt wird.

Durch eigene Untersuchungen konnte überraschenderweise festgestellt werden, dass der verfahrensspezifisch zum großen Teil als Aerosole in die Gasphase gelangende Phosphor und/oder die Phosphorverbindungen quasi vollständig zu einem Oxid, nachfolgend als Phosphat bezeichnet, umgewandelt, nach Abkühlung kleiner der Schmelztemperatur von P₂O₅, d.h. kleiner von 340 °C, als Staubbestandteil aus der ersten Stufe der einfachen, trockenen Entstaubung nach Stand der Technik abgeschieden und in die Schmelz- und Überhitzungszone des Ofens zur Luft- und/oder Sauerstoff-Schmelzvergasung zurückgeführt werden können. In einer zweiten Stufe werden dann gasförmige Schadstoffe, wie z.B. S- und Cl-Verbindungen ebenfalls nach dem Stand der Technik einfach bspw. durch Zugabe von Additiven und/oder durch Integrierung von Wäschern aus dem Gas abgeschieden.

Bei der Rückführung der Stäube aus der ersten Stufe der trockenen Entstaubung kann es abhängig vom Gehalt leicht flüchtiger Schwermetalle und ihrer Verbindungen zu einer Anreicherung dieser Schwermetalle im mit dem vollständig nachverbrannten Gas ausgetragenen Staub kommen. Dem wird abhängig vom Anreicherungsgrad durch eine Ausschleusung von Teilen der abgeschiedenen Stäube entgegengewirkt.

Nachfolgend wird die Erfindung an zwei Ausführungsbeispielen zur Abscheidung von P-haltigen Stäuben aus der ersten Stufe der gestaffelten Gasreinigung näher erläutert. Die Versuche erfolgten an einem metallurgischen Schachtofen zur Luft- und Sauerstoff-Schmelzvergasung mit einer lichten Schachtweite von 400 mm, einer nutzbaren Schachthöhe von 2 m und mit unmittelbar über der Begichtungsöffnung angeordneter Nachverbrennung. Das durchschnittliche Satzgewicht betrug 19,5 kg. Die Einsatzmengen und die Formlingsbestandteile zu jedem Versuch sind in Tafel 1 dargestellt.

**Tafel 1 Einsatzmaterial und Chargierung**

| **Mischung** | | **II** | **IV** |
|---|---|---|---|
| **Bestandteile im Formling** | | | |
| Klärschlamm | % | 60 | 49 |
| Asche aus Klärschlammmonoverbrennung | % | 40 | |
| Zement | % | 15 | |
| Tiermehl | % | | 47 |
| Sägespäne | % | | 4 |

| **Einsatzmenge pro Versuch** | | | |
|---|---|---|---|
| Formling | kg | 335 | 315 |
| Eisen | kg | 9,3 | 15,3 |
| Satzkoks | kg | 89,5 | 31,5 |
| Kalkstein | kg | | 6,3 |

Tafel 2 zeigt die durchschnittlich eingestellten Ofenparameter.

**Tafel 2 Ofenparameter**

| **Mischung** | | | | **II** | **IV** |
|---|---|---|---|---|---|
| **Schmelzleistung** | [Satz 1 bis Satzende] | | kg/h | 248 | 315 |
| **Sauerstoff** | Menge | Ǿ | Nm³/h | 25 | 22 |
| **Luft** | Menge | Ǿ | Nm³/h | 251 | 143 |
| **Luft** | Temperatur | Ǿ | °C | 236 | 217 |
| **Oberfeuer** | [visuell eingeschätzt] | | | normal | stark |

Korrespondierend mit der heizwertreichen Zusammensetzung aus 47 % Tiermehl, 49 % Klärschlamm und 4 % Sägespänen als Magerungsmittel entwickelte sich bei Versuch IV im Vergleich zu Versuch II ein starkes Oberfeuer.

Es wurden Schlackegranulate mit folgender Oxidanalyse (Tafel 3) erzeugt.

**Tafel 3 Oxide**

| | **SiO₂ %** | **Al₂O₃ %** | **CaO %** | **MgO %** | **FeO + Fe₂O₃ %** | **Fe_{met.} %** | **P₂O₅ %** |
|---|---|---|---|---|---|---|---|
| **II** | 27,6 | 19,9 | 32,5 | 3,8 | 3,3 | 0,2 | 10,6 |
| **IV** | 28,7 | 20,5 | 33,8 | 3,3 | 1,3 | 1,3 | 3,8 |

**Tafel 4 Staubanalyse chemisch**

| **Mischung** | | **II** | **IV** |
|---|---|---|---|
| P₂O₅ gesamt | Ma.-% | 17,3 | 19,8 |
| SO₃ gesamt | Ma.-% | 0,16 | 0,08 |
| ZnO gesamt | Ma..-% | 1,25 | 1,79 |
| TiO₂ | Ma.-% | 0,56 | 0,19 |
| Fe₂O₃ | Ma.-% | 11,5 | 35,9 |
| Al₂O₃ | Mal.-% | 14,9 | 3,47 |
| SiO₂ | Ma.-% | 25,9 | 19,3 |
| Na₂O | Ma.-% | 0,83 | 1,92 |
| K₂O | Ma.-% | 1,77 | 3,76 |
| CaO | Ma-% | 24,5 | 10,0 |
| MgO | Ma-% | 2,85 | 1,38 |
| MnO | Ma-% | 0,15 | 0,46 |

Die abgeschiedenen Stäube aus dem vollständig nachverbrannten Ofengas enthielten neben den üblichen Aschekomponenten gem. Tabelle 4 einen erheblichen Anteil an P₂O₅.

Der Phosphatanteil bildet nach Tabelle 5 ein Ca-Fe-Phosphat (Ca₉Fe(PO₄)₇), welches eine stöchiometrische Mischung von Fe₂O₃, CaCO₃ und Ca₂P₂O₇ darstellt [Solid State Sciences 6(2004) 186].

**Tafel 5 Staubanalyse mineralogisch**

| **Mischung** | **II** | **IV** |
|---|---|---|
| Quarz | SiO₂ | SiO₂ |
| Ca-Fe-Phosphat | Ca₉Fe(PO₄)₇ | Ca₉Fe(PO₄)₇ |
| Hämatit | Fe₂O₃ | |
| Maghemit | | Fe₂O₃ |
| Caliciumaluminat (C3A) | Ca₃Al₂O₆ | Ca₃Al₂O₆ |
| Magnesit | | MgCO₃ |
| Calcit | | CaCO₃ |
| Meionit | (Ca,Na)₂(Si, Al)₆O₁₂(CO₃)_{0,5} | |
| K-Fe-Oxid | KFeO₂ | |
| Picromerit | | K₂Mg(SO₄)₂*6H₂O |
| Jarosit | | (K, H₃O)Fe₃(SO₄)₂(OH)₆ |

## Patentansprüche

1. Verfahren zur stofflichen und/oder energetischen Verwertung von phosphorhaltigen Abfällen mittels Luft- und/oder Sauerstoff-Schmelzvergasung in metallurgischen Schachtöfen, **gekennzeichnet dadurch, dass**
• das bei der Luft- und/oder Sauerstoff-Schachtschmelzvergasung erzeugte heizwertreiche Brenngas und die im Brenngas enthaltenen gasförmigen Phosphor- und/oder die im Brenngas enthaltenen Phosphor-Verbindungen und/oder Aerosole direkt mit Verbrennungsmittelüberschuss (l>1) und die oxidierbaren leichtflüchtigen Schwermetalle und ihre Verbindungen vollständig nachverbrannt werden,
• das der im vollständig ausgebranntem Brenngas enthaltene Staub und die aus den gasförmigen Phosphor und/oder Phosphor-Verbindungen und/oder Aerosolen gebildeten Oxidverbindungen auf Temperaturen kleiner der Schmelztemperatur von P₂O₅ abgekühlt werden,
• das der im vollständig ausgebranntem Brenngas enthaltene Staub und die aus den gasförmigen Phosphor- und/oder Phosphor- Verbindungen und/oder Aerosolen und/oder leichtflüchtigen Schwermetallen und ihren Verbindungen gebildeten Oxidverbindungen in der ersten Stufe der Gasreinigung ohne Zugabe gasförmige Schadstoffe bindender Additive trocken abgeschieden werden,
• das der abgeschiedene Staub gemeinsam mit den Oxidverbindungen in die Schmelz- und Überhitzungszone der metallurgischen Schachtöfen mit Luft- und/oder Sauerstoff-Schmelzvergasung zurückgeführt wird und
• das aus dem Gas ab einer zweiten Stufe durch Zugabe gasförmige Schadstoff bindender Additive und/oder durch Integrierung von Wäschern gasförmige Schadstoffe abgeschieden werden.

2. Verfahren zur stofflichen und energetischen Verwertung von phosphorhaltigen Abfällen mittels Luft- und/oder Sauerstoff-Schmelzvergasung in metallurgischen Schachtöfen nach Anspruch 1, **gekennzeichnet dadurch, dass** das vollständig ausgebrannte Brenngas vor Eintritt in die erste Stufe der Gasreinigung auf Temperaturen größer der Kondensationstemperatur von Wasserdampf und kleiner der Schmelztemperatur von P₂O₅ abgekühlt wird.

3. Verfahren zur stofflichen und energetischen Verwertung von phosphorhaltigen Abfällen mittels Luft- und/oder Sauerstoff-Schmelzvergasung in metallurgischen Schachtöfen nach Anspruch 1 und Anspruch 2, **gekennzeichnet dadurch, dass** das vollständig ausgebrannte Brenngas vor Eintritt in die ersten Stufe der Gasreinigung auf Temperaturen kleiner 300 °C, vorzugsweise auf 150 °C abgekühlt wird.

4. Verfahren zur stofflichen und energetischen Verwertung von phosphorhaltigen Abfällen mittels Luft- und/oder Sauerstoff-Schmelzvergasung in metallurgischen Schachtöfen nach Anspruch 1 bis Anspruch 3, **gekennzeichnet dadurch, dass** die Menge des in die Schmelz- und Überhitzungszone der metallurgischen Schachtöfen mit Luft- und/oder Sauerstoff-Schmelzvergasung zurückgeführten Staubes die Gesamtmenge oder eine Teilmenge der in der ersten Stufe der Gasreinigung ohne Zugabe gasförmige Schadstoffe bindender Additive trocken abgeschiedenen Staubmenge ist.

5. Anlage zur stofflichen und energetischen Verwertung von phosphorhaltigen Abfällen mittels Luft- und/oder Sauerstoff-Schmelzvergasung in metallurgischen Schachtöfen, **gekennzeichnet dadurch, dass** im oder direkt am metallurgischen Schachtofen eine Nachverbrennungskammer als Bestandteil einer gestaffelten Gasreinigung, bestehend aus der ersten Stufe als trockene Entstaubung ohne Zugabeeinrichtung für Additive und mit Austragungseinrichtung für Stäube mit integrierter Staubrückführungseinrichtung zur Schmelz- und Überhitzungszone des metallurgischen Schachtofens und der zweiten Stufe als Gasbehandlungseinrichtung, bestehend aus trockener Entstaubung mit Zugabeeinrichtung für Additive und mit Austragungseinrichtung für Stäube und/oder durch Integrierung von Wäschern angeordnet sind.

6. Anlage zur stofflichen und energetischen Verwertung von phosphorhaltigen Abfällen mittels Luft- und/oder Sauerstoff-Schmelzvergasung in metallurgischen Schachtöfen nach Anspruch 6, **gekennzeichnet dadurch, dass** das die erste Stufe der trockenen Entstaubung ein Elektrofilter ist.

## Claims

1. A method for recovering material and/or energy from phosphorus-containing waste by way of air and/or oxygen melt gasification in metallurgical shaft furnaces, **characterized in that**
- the fuel gas, which has a high calorific value and is generated during the air and/or oxygen shaft melt gasification, and the gaseous phosphorus contained in the fuel gas and/or the phosphorus compounds and/or aerosols contained in the fuel gas and the oxidizable highly volatile heavy metals and the compounds thereof are directly and completely post-incinerated, with an excess of incineration material (λ > 1);
- the dust contained in the completely spent fuel gas and the oxide compounds formed of the gaseous phosphorus and/or phosphorus compounds and/or aerosols are cooled to temperatures below the melting temperature of P₂O₅;
- the dust contained in the completely spent fuel gas and the oxide compounds formed of the gaseous phosphorus and/or phosphorus compounds and/or aerosols and/or highly volatile heavy metals and the compounds thereof are separated in dry form in the first stage of the gas purification process, without adding additives that bind gaseous harmful substances;
- the separated dust is recirculated together with the oxide compounds into the melting and superheating zone of the metallurgical shaft furnaces having air and/or oxygen melt gasification; and
- starting at a second stage, gaseous harmful substances are separated from the gas by adding additives that bind gaseous harmful substances and/or by integrating scrubbers.

2. The method for recovering material and energy from phosphorus-containing waste by way of air and/or oxygen melt gasification in metallurgical shaft furnaces according to Claim 1, **characterized in that**, prior to entering the first stage of the gas purification process, the fully spent fuel gas is cooled to temperatures higher than the condensation temperature of water vapour and lower than the melting temperature of P₂O₅.

3. The method for recovering material and energy from phosphorus-containing waste by way of air and/or oxygen melt gasification in metallurgical shaft furnaces according to Claim 1 and Claim 2, **characterized in that**, prior to entering the first stage of the gas purification process, the fully spent fuel gas is cooled to temperatures lower than 300°C, and preferably to 150°C.

4. The method for recovering material and energy from phosphorus-containing waste by way of air and/or oxygen melt gasification in metallurgical shaft furnaces according to Claim 1 to Claim 3, **characterized in that** the amount of dust recirculated into the melting and superheating zone of the metallurgical shaft furnaces having air and/or oxygen melt gasification is the total amount, or a partial amount, of the amount of dust that is separated in dry form in the first stage of the gas purification process, without adding additives that bind gaseous harmful substances.

5. A plant for recovering material and energy from phosphorus-containing waste by way of air and/or oxygen melt gasification in metallurgical shaft furnaces, **characterized in that** a post-incineration chamber is provided in or directly on the metallurgical shaft furnace as an integral part of a graduated gas purification process, comprising the first stage as dry dedusting having no addition device for additives and having a removal device for dust, having an integrated dust recirculation device to the melting and superheating zone of the metallurgical shaft furnace, and the second stage as a gas treatment device, comprising dry dedusting having an addition device for additives and a removal device for dust and/or by integrating scrubbers.

6. The plant for recovering material and energy from phosphorus-containing waste by way of air and/or oxygen melt gasification in metallurgical shaft furnaces according to Claim 6, **characterized in that** the first stage of the dry dedusting is an electric filter.

## Revendications

1. Procédé pour le recyclage des matières et/ou le recyclage énergétique de déchets phosphoriques au moyen d'une gazéification de fusion à l'air et/ou à l'oxygène dans des fours à cuve métallurgiques, **caractérisé en ce que**
• le gaz combustible riche en calories généré lors de la gazéification de fusion à l'air et/ou à l'oxygène et/ou gaz combustible et/ou le phosphore et/ou les composés phosphoriques et/ou aérosols contenus dans le gaz combustible sont soumis à une postcombustion complète directement avec l'excès de comburant (1>1) et les métaux lourds facilement volatils sont soumis à une postcombustion totale,
• la poussière contenue dans le gaz combustible complètement brûlé et ou les composés d'oxyde formés à partir du phosphore et/ou des composés phosphoriques gazeux et/ou des aérosols sont refroidis à des températures inférieures à la température de fusion de P₂O₅,
• la poussière contenue dans le gaz combustible complètement brûlé et ou les composés d'oxyde formés à partir du phosphore et/ou des composés phosphoriques gazeux et/ou des aérosols et/ou des métaux lourds facilement volatils et de leurs composés sont séparés à sec dans la première étape de l'épuration gazeuse, sans ajout d'additifs liant des polluants gazeux,
• que la poussière séparée est renvoyée en commun avec les composés d'oxyde dans la zone de fusion et de surchauffe des fours à cuve métallurgiques avec la gazéification de fusion à l'air et/ou à l'oxygène,
• des polluants gazeux formés par ajout d'additifs liant des polluants gazeux et/ ou par intégration d'agents laveurs sont séparés dans une deuxième étape.

2. Procédé pour le recyclage des matières et/ou le recyclage énergétique de déchets phosphoriques au moyen d'une gazéification de fusion à l'air et/ou à l'oxygène dans des fours à cuve métallurgiques selon la revendication 1, **caractérisé en ce qu'** avant l'entrée dans le première étape de l'épuration gazeuse, le gaz combustible complètement brûlé est refroidi à des températures supérieures à la température de condensation de la vapeur d'eau et inférieures à la température de fusion du on P₂O₅.

3. Procédé pour le recyclage des matières et/ou le recyclage énergétique de déchets phosphoriques au moyen d'une gazéification de fusion à l'air et/ou à l'oxygène dans des fours à cuve métallurgiques selon la revendication 1 et la revendication 2, **caractérisé en ce qu'**avant l'entrée dans la première étape de l'épuration gazeuse, le gaz combustible complètement brûlé est refroidi à des températures inférieures à 300 °C, de préférence à 150 °C.

4. Procédé pour le recyclage des matières et/ou le recyclage énergétique de déchets phosphoriques au moyen d'une gazéification de fusion à l'air et/ou à l'oxygène dans des fours à cuve métallurgiques selon la revendication 1 à la revendication 3, **caractérisé en ce que** la quantité de la poussière renvoyée dans la zone de fusion et de surchauffe des fours à cuve métallurgiques avec gazéification de fusion à l'air et/ou à l'oxygène est la quantité totale ou une quantité partielle de la quantité de poussière séparée dans la première étape de l'épuration gazeuse sans ajout d'additifs liant des polluants gazeux.

5. Installation pour le recyclage des matières et/ou le recyclage énergétique de déchets phosphoriques au moyen d'une gazéification de fusion à l'air et/ou à l'oxygène dans des fours à cuve métallurgiques , **caractérisée en ce que** dans ou directement sur le four à cuve métallurgique est placée une chambre de postcombustion en tant qu'élément d'une épuration gazeuse échelonnée; constituée de la première étape en tant que dépoussiérage à sec sans système d'ajout d'additifs et avec un système d'évacuation des poussières avec système intégré de renvoi des poussières vers la zone de fusion et de surchauffe du four à cuve métallurgique et de la deuxième étape en tant que système de traitement des gaz, constituée d'un dépoussiérage à sec avec système d'ajout d'additifs et avec système d'évacuation des poussières et/ou par intégration d'agents laveurs.

6. Installation pour le recyclage des matières et/ou le recyclage énergétique de déchets phosphoriques au moyen d'une gazéification de fusion à l'air et/ou à l'oxygène dans des fours à cuve métallurgiques selon la revendication 5 , **caractérisée en ce que** la première étape du dépoussiérage à sec est un filtre électrostatique.
